# FASCICULE DE BREVET EUROPEEN

(11) **EP 1 299 986 B1**
(45) Date de publication et mention de la délivrance du brevet: **26.09.2012**
(21) Numéro de dépôt: 01984203.8
(22) Date de dépôt: 05.07.2001
(51) Int. Cl.: H04L 29/06, H04M 7/00

(54) **PROCEDE D'ETABLISSEMENT DE COMMUNICATIONS DANS UN SYSTEME A COMMUTATION DE PAQUETS**
VERFAHREN ZUM VERBINDUNGSAUFBAU IN EINEM PAKETVERMITTLUNGSSYSTEM
METHOD FOR SETTING UP COMMUNICATIONS IN A PACKET SWITCHING SYSTEM

(30) Priorité: 07.07.2000 FR 0008897
(43) Date de publication de la demande: 09.04.2003
(73) Titulaire: AASTRA MATRA TELECOM, 78280 Guyancourt (FR)
(72) Inventeur: MERCURIALI, Jean-Pierre, F-91400 Orsay (FR)
(74) Mandataire: Gevers France
(86) Numéro de dépôt international: PCT/FR2001/002161
(87) Numéro de publication internationale: WO 2002/005512

(56) Documents cités:
- KORPI M ET AL: "SUPPLEMENTARY SERVICES IN THE H.323 IP TELEPHONY NETWORK" IEEE COMMUNICATIONS MAGAZINE,US,IEEE SERVICE CENTER. PISCATAWAY, N.J, vol. 37, no. 7, juillet 1999 (1999-07), pages 118-125, XP000835313 ISSN: 0163-6804
- THOM G A: "H. 323: THE MULTIMEDIA COMMUNICATIONS STANDARD FOR LOCAL AREA NETWORKS" IEEE COMMUNICATIONS MAGAZINE,US,IEEE SERVICE CENTER. PISCATAWAY, N.J, vol. 34, no. 12, 1 décembre 1996 (1996-12-01), pages 52-56, XP000636454 ISSN: 0163-6804
- ANQUETIL L -P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION,ALCATEL. BRUSSELS,BE, 1 avril 1999 (1999-04-01), pages 151-157, XP000830045 ISSN: 0013-4252
- SALMAN M A ET AL: "THE FUTURE OF IP-PSTN INTERWORKING" UTRECHT, NL, AUG. 24 - 28, 1999,LONDON: IBTE,GB, 24 août 1999 (1999-08-24), pages 163-167, XP000847190
- HUITEMA C ET AL: "AN ARCHITECTURE FOR RESIDENTIAL INTERNET TELEPHONY SERVICE" IEEE NETWORK,IEEE INC. NEW YORK,US, vol. 13, no. 3, mai 1999 (1999-05), pages 50-56, XP000870631 ISSN: 0890-8044

## Description

La présente invention concerne un procédé d'établissement de communications entre terminaux dans un système de communication, en particulier dans un système multimédia.

L'invention s'applique notamment à un système de communication fonctionnant sur un réseau de transmission de paquets selon le protocole IP (« Internet Protocol », Request for Comments (RFC) 760, Internet Engineering Task Force (IETF), janvier 1980) auquel sont connectés un ou plusieurs serveurs d'appel fournissant des services de téléphonie à un ensemble d'abonnés.

Le succès des réseaux fonctionnant selon le protocole IP a conduit à développer des protocoles en temps réel RTP (« Real Time Protocol »), et RTCP («Real Time Control Protocol ») capables de supporter du trafic de type téléphonie. On dispose maintenant de terminaux de téléphonie qui se raccordent à de tels réseaux, ci-après appelés « terminaux IP ». Ces terminaux IP peuvent notamment prendre la forme de téléphones classiques, conçus pour fonctionner sur des réseaux à commutation de circuit, associés à des adaptateurs appropriés, de terminaux téléphoniques raccordables directement au réseau IP (par exemple, le terminal de marque « Etherset » commercialisé par la société Nortel Networks), ou encore de micro-ordinateurs équipés de logiciels de téléphonie (par exemple le logiciel de marque « Netmeeting » commercialisé par la société Microsoft).

Le succès des réseaux IP suggère d'autre part de les utiliser pour supporter du trafic de téléphonie ou plus généralement du trafic multimédia non seulement entre deux utilisateurs de terminaux IP, mais aussi entre utilisateurs de terminaux traditionnels. L'un des objectifs du projet TIPHON (« Telecommunications and Internet Protocol Harmonisation Over Networks ») mené par l'ETSI (« European Telecommunications Standards Institute ») est de résoudre les problèmes d'interopérabilité entre les applications de transport de la voix sur IP et les réseaux à commutation de circuits.

Ce projet reprend le modèle fonctionnel défini dans la norme H.323 de l'Union Internationale des Télécommunications (UIT-T), qui définit trois entités, le garde-barrière (« gatekeeper »), la passerelle (« gateway »), et le terminal. Les fonctions de la passerelle de H.323 ont été distribuées par TIPHON sur trois modules : la passerelle de signalisation (« Signalling Gateway » ou SG), la passerelle de média (« Media GateWay » ou MGW), et le contrôleur de passerelle de média (« Media Gateway Controller » ou MGC).

La passerelle de média convertit des flux provenant d'un premier type de réseau vers un format correspondant à un second type de réseau. Lorsqu'elle est par exemple utilisée entre un réseau classique à commutation de circuit et un réseau à commutation de paquets fonctionnant selon le protocole IP, elle fournit typiquement un point d'accès pour différents types de terminaux « classiques » (terminaux analogiques, postes RNIS, relais de téléphone sans fil, etc.), et elle comprend d'autre part un point d'accès connecté au réseau IP.

Dans cette architecture, les traitements de signalisation concernant l'établissement d'une communication (ou toute autre fourniture de service) à travers la passerelle de média sont effectués par le contrôleur de passerelle (MGC). Ces traitements comprennent d'une part les tâches de supervision de la MGW pour identifier la signalisation voix (prise de ligne, relâchement, numérotation, occupation, taxation, ...) et la traduire en signalisation de haut niveau et pour adresser diverses commandes à la MGW (sonnerie, tonalités, affichage, ...), et d'autre part des tâches de gestion d'appel pour traiter les requêtes concernant la MGW.

Les tâches de gestion d'appel utilisent habituellement des messages selon des formats et protocoles standardisés, tels que par exemple H.323 ou SIP (« SIP : Session Initiation Protocol », RFC 2543, IETF, mars 1999), tandis que les tâches de contrôle de MGW assurent les traductions nécessaires pour tenir compte des spécificités propres aux différents types de terminaux ou de réseaux susceptibles d'être raccordés à la MGW pilotée. La MGC a pour cela la faculté de télécharger dans le MGW des scripts de description de profils de terminaux en utilisant des protocoles tels que MGCP, H.248, ou Megaco.

Ces protocoles décrivent les messages échangés par des entités MGW et MGC physiquement distinctes (voir par exemple, « Megaco Protocol », Internet Draft, IETF, 21 Février 2000). Ils permettent le pilotage de plusieurs MGW par un seul MGC. Chaque MGW est entièrement pilotée par un MGC, de sorte qu'elle ne comporte aucune intelligence logicielle. Cette distinction fonctionnelle, essentiellement basée sur la frontière entre logiciel et matériel, impose au MGC de disposer de la capacité de piloter l'ensemble des signalisations des lignes de connexions des différents équipements qui peuvent être connectés à chaque MGW pilotée. Cela augmente considérablement la complexité des messages échangés sur l'interface entre les deux types d'équipements.

Un inconvénient supplémentaire est révélé par l'analyse des traitements de signalisation effectués pour l'établissement d'un chemin de phonie entre deux terminaux connectés à une même MGW. Actuellement, les MGW Incorporent une matrice de commutation qui permet d'effectuer des connexions entre les différentes interfaces classiques de téléphonie afin d'assurer l'acheminement des signaux en mode circuit. A réception d'un message d'établissement d'appel en provenance d'un serveur d'appel et à destination d'un terminal classique raccordé sur un point d'accès d'une MGW pilotée par une MGC, le MGC transmet eu MGW une requête de connexion au sein de la MGW entre le point d'accès IP, une entrée de la matrice de commutation, et le point d'accès du terminal demandé, y compris dans le cas où l'appel provient d'un terminal classique raccordé à la même MGW que la terminal appelé. Seul la MGC peut en effet contrôler les connexions internes effectuées au sein d'une MGW pour relier deux points d'accès, de même que les connexions avec le point d'accès IP de la MGW.

Ainsi, dès lors qu'une communication mettant en jeu deux terminaux connectés sur une même passerelle de média doit être établie, la phrase d'établissement nécessite la réservation de ressources du point d'accès IP au niveau de la MGW de rattachement des terminaux en vue de l'établissement des connexions requises.

On connait un document H. 323 : The multimédia communications standard for local area networks, IEEE communications Magozinc, vol. 34. n°12, p5-65, 111211996 de G. Thom qui décrit un système dans lequel des ressources du point d'accès au niveau de la passerelle de rattachement sont ainsi réservées.

Un but de la présente invention est d'optimiser, dans un système de communication de ce type, l'utilisation des ressources mobilisées au sein des entités formant les passerelles.

Selon l'Invention, il est proposé un procédé d'établissement de communications dans un système comprenant un réseau à commutation de paquets, au moins un serveur d'appel relié au réseau, au moins une passerelle de média reliée au réseau à une adresse de passerelle, un premier ensemble de terminaux reliés au réseau à des adresses de terminaux respectives, et un
second ensemble de terminaux reliés à des interfaces de la passerelle de média. Chaque terminal est associé à un serveur d'appel pour des traitements de signalisation. Le procédé selon l'invention comprend les étapes suivantes pour établir une communication entre des terminaux appelant et appelé :
- création d'une première tâche de traitement d'appel dans le serveur d'appel associé au terminal appelant ;
- émission, par la première tâche de traitement d'appel, d'un message d'établissement incluant au moins un identifiant du terminal appelé et une première adresse de réseau permettant d'atteindre le terminal appelant ;
- en réponse à la réception dudit message d'établissement, création d'une seconde tâche de traitement d'appel dans le serveur d'appel associé au terminal appelé ;
- envoi, à partir de la seconde tâche de traitement d'appel vers une seconde adresse de réseau permettant d'atteindre le terminal appelé, d'informations de signalisation indiquant au moins ladite première adresse de réseau ;
- lorsque les première et seconde adresse de réseau sont identiques et correspondent à une adresse de passerelle, établissement au sein de la passerelle ayant ladite adresse d'un chemin de communication entre les terminaux appelant et appelé, ne passant pas par le réseau à commutation de paquets.

Le procédé optimise l'utilisation du réseau à commutation de paquets servant de support a système de communication (ce réseau sera généralement de type IP). Le passage par le réseau IP et l'utilisation des ressources d'adressage correspondantes sont évités lorsque la passerelle détermine qu'elle peut aiguiller localement la communication sans passer par l'interface réseau.

Un autre aspect de la présente invention se rapporte à une passerelle de média, comprenant une interface de raccordement à un réseau à commutation de paquets, des interfaces de raccordement d'un ensemble de terminaux, une matrice de commutation reliée auxdites interfaces, et des moyens de commande des interfaces et de la matrice de commutation pour établir des chemins de communication, au moins un serveur d'appel étant relié au réseau pour effectuer des traitements de signalisation pour au moins les terminaux dudit ensemble, dans laquelle les moyens de commande sont agencés pour établir un chemin de communication en réponse à des instructions issues du serveur d'appel dans un échange de signalisation effectué sur le réseau à commutation de paquets, échange au cours duquel les moyens de commande obtiennent des adresses de réseau respectives pour des terminaux appelant et appelé dont l'un au moins appartient audit ensemble, le chemin établi passant par des interfaces de raccordement des terminaux appelant et appelé et par la matrice de commutation, sans passer par l'interface de raccordement au réseau, lorsque lesdites adresses de réseau sont identiques et correspondent à une adresse de réseau de la passerelle, et le chemin établi passant par une interface de raccordement de l'un des terminaux appelant et appelé, par l'interface de raccordement au réseau et par la matrice de commutation lorsque l'une desdites adresses de réseau diffère de l'adresse de réseau de la passerelle.

D'autres particularités et avantages de l'invention apparaîtront dans la description ci-après d'exemples de réalisation non limitatifs, en référence aux dessins annexés, dans lesquels :
- la figure 1 est un schéma d'un système de communication mettant en oeuvre l'invention ;
- la figure 2 est un schéma synoptique d'une passerelle selon l'invention ;
- les figures 3 à 6 sont des diagrammes illustrant des procédures de demi-appel respectivement dans le cas d'un terminal appelant de type IP, dans le cas d'un terminal appelé de type IP, dans le cas d'un terminal appelant de type non-IP et dans le cas d'un terminal appelé de type non-IP.

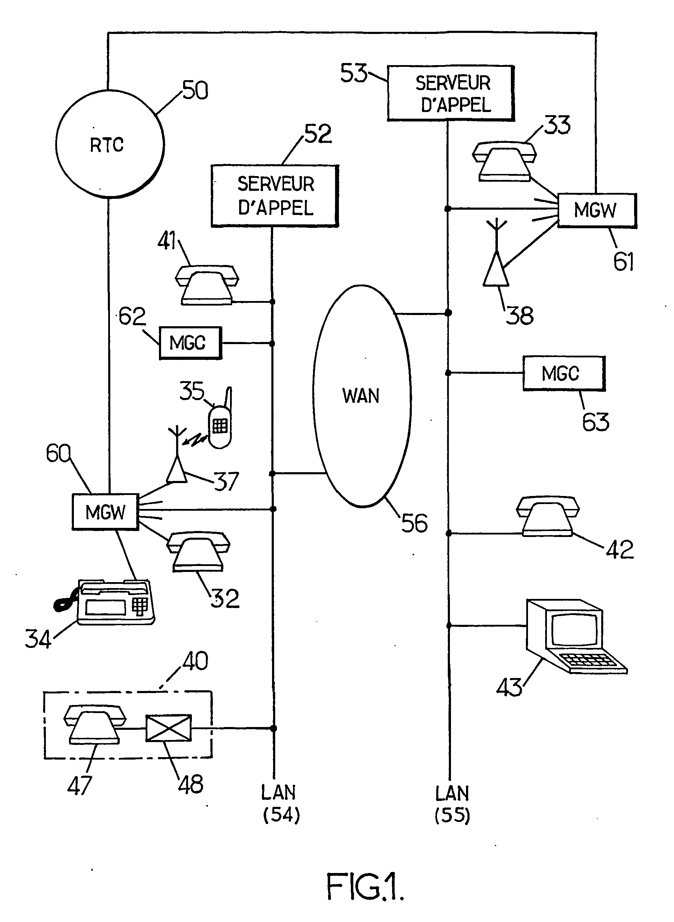

La figure 1 montre, à titre illustratif, un exemple de système de communication construit à partir d'un réseau IP constitué de deux réseaux locaux (LAN, « Local Area Network ») 54, 55 reliés entre eux par l'intermédiaire d'un réseau étendu (WAN, « Wide Area Network ») 56. Le WAN joue le rôle d'interconnexion entre les sous-réseaux 54, 55 formés par les LAN.

Différents terminaux IP 40-43 sont directement connectés aux LAN 54, 55, et sont gérés par deux serveurs d'appel 52, 53 qui sont respectivement connectés aux sous-réseaux 54, 55. Il pourrait aussi y avoir un seul serveur d'appel pour l'ensemble du réseau. Un tel terminal 40 peut être un téléphone classique 47 associé à un adaptateur 48 pour le raccordement au réseau IP, un terminal téléphonique 41, 42 incorporant une interface IP ou encore un micro-ordinateur 43 exécutant une application de téléphonie sur réseau IP.

L'invention est décrite ci-après dans le cas particulier où le réseau utilise la norme H.323 de l'UIT-T pour la signalisation d'appel. Chaque serveur d'appel 52, 53 a alors la fonction de « gatekeeper ».

Pour la transmission de la parole codée sur le réseau IP 54-56, on utilise, comme il est usuel, le protocole de transport UDP (« User Datagram Protocol », RFC 768, IETF, août 1980) et les protocoles temps réel RTP et RTCP. Différents modes de codage/décodage de la parole peuvent être utilisés par les terminaux IP 40-43. Dans le cas de H.323, le codage audio peut être conforme à l'une des Recommandations G.711, G.722, G.723.1, G.728 et G.729 de l'UIT-T.

Dans l'exemple représenté, chaque sous-réseau comporte une passerelle de média (MGW) 60, 61 reliée au LAN 54, 55. Chaque MGW a une adresse déterminée dans le réseau IP. Des terminaux classiques (c'est-à-dire non IP) 32-35 peuvent être connectés à l'une des MGW 60, 61. Ces terminaux sont par exemple de type S.63 (32, 33) ou RNIS (34) ou encore des terminaux sans fil 35 qui se connectent par l'intermédiaire de bornes radio 37, 38 (par exemple DECT) reliées aux MGW.

Une ou plusieurs MGW peuvent d'autre part comporter des interfaces pour le raccordement à des réseaux extérieurs tels qu'un réseau téléphonique commuté (RTC) 50.

Dans l'exemple représenté, chaque MGW est respectivement pilotée par un contrôleur de passerelle de média (MGC) 62, 63. L'ensemble MGC/MGW assure l'interface entre le réseau IP équipé de ses serveurs d'appel 52, 53 et différents types de lignes, selon les compatibilités désirées du système.

La signalisation entre le serveur d'appel 52, 53 et le MGC 62, 63 est par exemple transportée selon les protocoles de la norme H.323 (H.225 pour la signalisation de haut niveau et H.245 pour la signalisation voix), tandis que le protocole Megaco peut structurer les échanges entre le MGC 62, 63 et la MGW 60,61.

Chaque terminal téléphonique 32-35, 40-43 susceptible de communiquer par l'intermédiaire du réseau 54-56 a un serveur d'appel de rattachement qui, dans le cas d'un terminal filaire, est typiquement celui raccordé au même sous-réseau que le terminal. Ce serveur d'appel de rattachement assure notamment les traitements de signalisation concernant les terminaux.

Dans l'exemple considéré, la signalisation est transmise sur le réseau IP conformément à la norme H.323 dans des sessions du protocole de transport TCP (« Transmission Control Protocol », RFC 793, IETF, septembre 1981) établies entre deux serveurs d'appel ou entre un terminal IP et son serveur d'appel. Dans le cas d'un terminal relié par l'intermédiaire d'une passerelle 60, 61, son serveur d'appel 52, 53 dialogue avec le MGC 62, 63 selon la norme H.323 dans une session TCP, le MGC 62, 63 dialogue avec le MGW 60, 61 selon le protocole Megaco dans une autre session TCP, et la MGW dialogue avec le terminal selon le format de signalisation propre au type de terminal.

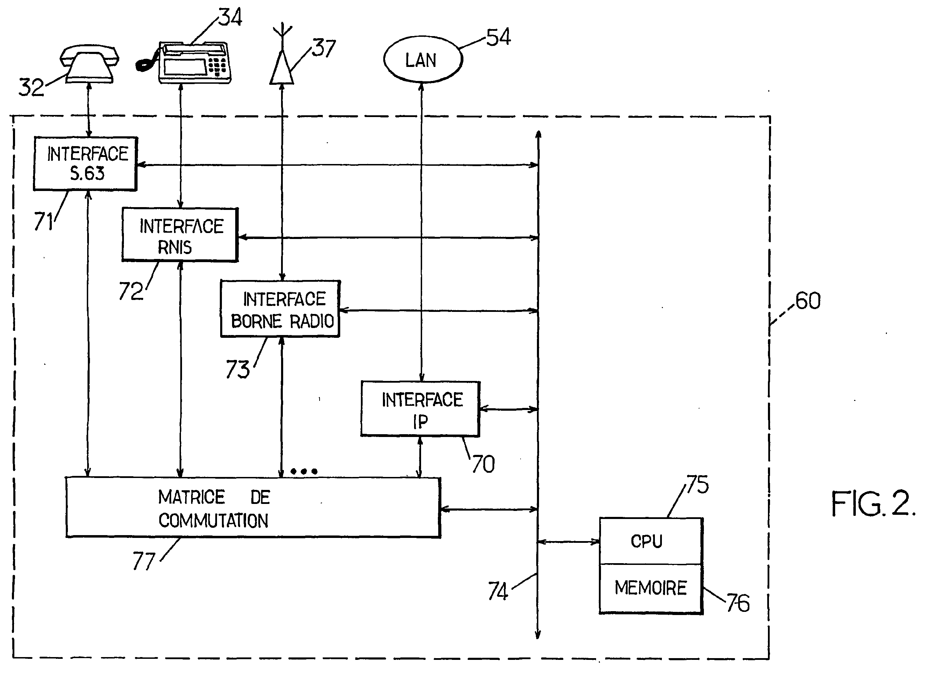

La figure 2 montre la structure d'une MGW 60 qui incorpore des points d'accès pour terminaux analogiques 32, RNIS 34 et pour le raccordement de bornes radio 37, ainsi qu'un point d'accès pour le raccordement au LAN 54.

Chaque point d'accès de la MGW 60 comporte une interface physique 70-73, qui assure les fonctions physiques de signalisation (détection d'événements, commandes, ...). Chacune des ces interfaces 70-73 est reliée au bus 74 d'un processeur 75 associé à une mémoire 76. Elles sont d'autre part reliées à une matrice de commutation 77, qui opère une commutation physique, sous le contrôle du processeur 75, entre des canaux multiplexés dans le temps conformément à un schéma de multiplexage propre à la MGW.

L'interface IP 70 est reliée au LAN 54, à l'adresse IP de la passerelle. Sous cette adresse, elle utilise un ou plusieurs ports logiques TCP pour les échanges de signalisation avec le MGC associé, et des ports logiques UDP pour les différentes sessions RTP-RTCP ouvertes pour transporter de la parole codée. Le port TCP de signalisation fait dialoguer les programmes de signalisation du processeur 75 avec le MGC. Les ports RTP/UDP sont associés à des modules de traduction reliés à la matrice de commutation 77.

Dans l'exemple représenté, la MGW a une ou plusieurs interfaces 71 pour terminaux analogiques 32, une ou plusieurs interfaces 72 pour terminaux RNIS 34 et une ou plusieurs interfaces 73 pour bornes radio 37. Chacune de ces interfaces 71-73 assure les traductions et mises en forme nécessaires à la compatibilité des organes raccordés aux points d'accès avec le format utilisé par la matrice de commutation. Elle extrait la signalisation reçue sur la ligne reliée au point d'accès et en avise le processeur 75, pour que celui-ci répercute l'information de signalisation vers le MGC, et elle insère de la signalisation sur la ligne sous le contrôle du processeur 75.

Un demi-appel concernant un terminal comporte la création d'une tâche Moniteur d'Appel Simple (MAS) dans le serveur d'appel de rattachement du terminal, qui réalise toutes les fonctions d'analyse et de décision (acheminement d'appel, demande de faculté, ...) intervenant dans la gestion d'appel. Pour ces fonctions, le MAS consulte des tables stockées dans le serveur d'appel, contenant l'association entre le numéro d'annuaire du terminal et une adresse IP correspondante, à laquelle ce terminal peut être atteint (l'adresse IP propre du terminal s'il est de type IP, et l'adresse IP d'une passerelle MGC et/ou MGW sinon). Ces tables définissent en outre les droits de l'utilisateur.

Différents types de modules logiciels sont utilisés par les processeurs du MGC et de la MGW pour effectuer les traitements de signalisation. Un demi-appel concernant un terminal non-IP comporte ainsi la création d'une tâche T_MGC au sein du MGC 62, 63, qui réalise les fonctions d'interface avec le MAS du serveur d'appel, tandis qu'une tâche T_MGW au sein de la MGW 60, 61 gère les détails spécifiques à chaque type de terminal. Pour ces fonctions, le T_MGW consulte des tables stockées dans la mémoire 66, qui contiennent notamment des informations relatives au type et à l'identification de l'interface 71-73 à laquelle l'équipement terminal est connecté ainsi qu'à l'identification de l'utilisateur associé (numéro d'annuaire). Le T_MGC consulte des tables mémorisées dans le MGC 62, 63, qui contiennent notamment des informations permettant d'associer des informations d'identification des utilisateurs, à savoir leurs numéros d'annuaire, et les adresses IP des MGW 60, 61 auxquelles ils sont raccordés. Lors de l'initialisation de la MGW 60, 61, la tâche T_MGW construit ses tables et se déclare au MGC 62, 63. La prise en compte de la mobilité des terminaux sans fil 35 peut conduire à des mises à jour de ces tables dans les MGW et les MGC.

Ainsi, la tâche MAS exécutée dans le serveur d'appel ne manipule que des équipements terminaux identifiés par des adresses IP et des numéros d'annuaire.

En variante, il est possible de se dispenser des MGC 62, 63 et de faire dialoguer directement les serveurs d'appel 52, 53 avec les MGW 60, 61 sans utiliser le protocole Megaco. Il suffit de munir la MGW de la capacité de traiter la signalisation H.323.

Cette variante sera considérée dans les scénarios d'appel décrits ci-dessous, pour en alléger la description. On pourra aisément transposer au cas où le réseau est équipé de MGC utilisant un protocole intermédiaire tel que Megaco ou MGCP.

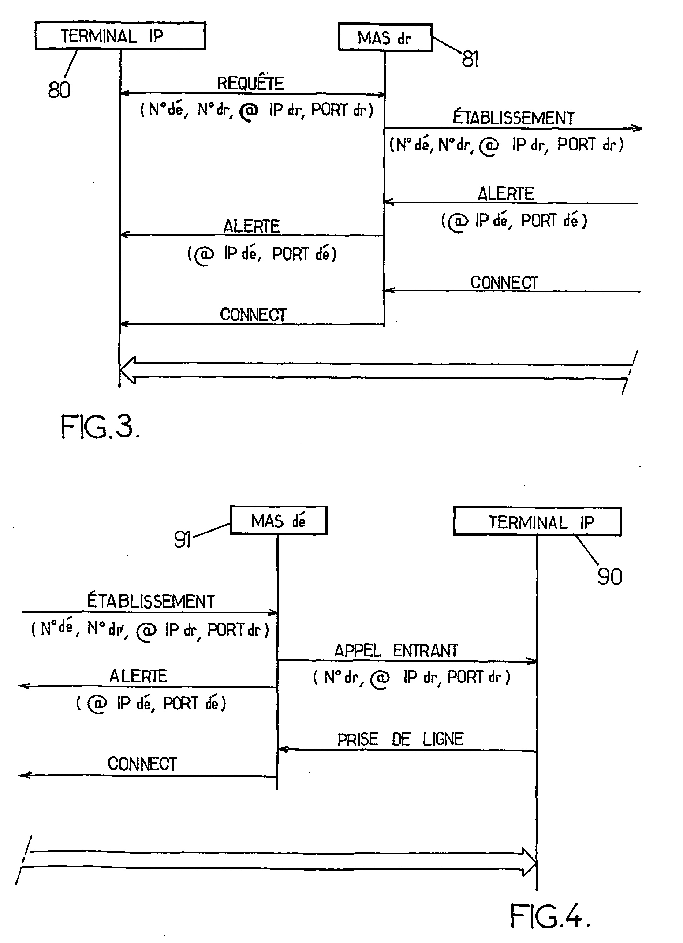

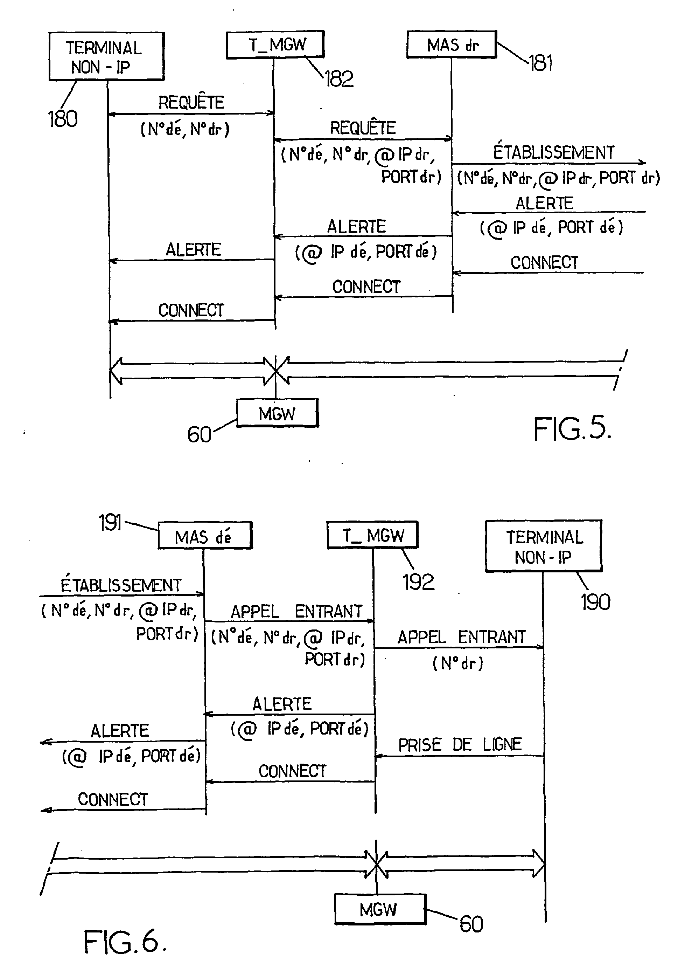

Dans les diagrammes des figures 3 à 6, chaque demi-appel concernant un terminal implique un traitement d'appel qui est exécuté complètement dans le serveur d'appel 52, 53 dans le cas d'un terminal IP 40-43 (tâche MAS, figures 3 et 4), et qui est divisé en tâches MAS, le cas échéant T_MGC, et T_MGW dans le cas d'un terminal non-IP (figures 5 et 6). Dans chaque diagramme, la notation « dr » fait référence au terminal demandeur, et la notation « dé » fait référence au terminal demandé.

Un appel commence par un échange d'informations entre le terminal appelant 80, 180 et la tâche MAS 81, 181 qui lui correspond (figures 3 et 5). Cette tâche MAS a par exemple été créée par le serveur d'appel du terminal appelant 80, 180 à réception d'un message signalant la prise de ligne par ce terminal. Elle adresse au terminal les messages codant les informations à présenter à l'utilisateur (affichages, tonalités, ...), et récupère les données fournies par l'utilisateur pour définir sa requête (choix de fonctions, numérotation, ...).

Lorsque l'échange avec le terminal appelant 80, 180 lui permet de disposer d'informations suffisantes, la tâche MAS 81, 181 produit un message d'établissement comportant notamment les éléments suivants :
- le numéro d'annuaire du terminal appelé 90, 190, défini directement ou indirectement par l'utilisateur du terminal appelant 80, 180 ;
- une adresse IP permettant d'atteindre le terminal appelant 80, 180 dans le réseau 54-56, un numéro de port UDP correspondant pour la transmission de phonie selon le protocole RTP et un autre numéro de port UDP pour la transmission des informations de contrôle selon le protocole RTCP ;
- éventuellement le numéro d'annuaire du terminal appelant 80, 180.

Le message d'établissement est envoyé à l'adresse IP du serveur d'appel qui créera la tâche MAS 91, 191 pour le demi-appel du côté demandé. Cette adresse IP est déduite du numéro d'annuaire du terminal appelé. Cette déduction peut être implicite dans l'organisation des numéros d'annuaire, où résulter de la consultation d'une table dont disposent les serveurs d'appel. Si le même serveur d'appel est amené à traiter le demi-appel du côté demandé (ce qui se produit toujours dans le cas particulier où il n'y a qu'un seul serveur d'appel), le message d'établissement n'a pas besoin de transiter sur le réseau IP.

Dans le cas d'un terminal appelant 80 de type IP, le dialogue avec le serveur d'appel s'effectue directement dans une connexion TCP entre le terminal et la tâche MAS 81 (figure 3).

Dans le cas d'un terminal non-IP 180, il s'effectue par l'intermédiaire de la tâche T_MGW 182 (et T_MGC le cas échéant) qui réalise l'interface logicielles avec le protocole H.323 et/ou Megaco (figure 5). La tâche T_MGW 182 est créée dans la passerelle 60 à réception de la signalisation de prise de ligne par l'interface physique concernée 71-73. C'est cette tâche T_MGW qui fournit l'adresse IP (à savoir celle de la MGW) et les numéros de port UDP affectés au terminal, et elle émet un message d'ouverture de session à l'adresse IP du serveur d'appel correspondant 52.

Si elle accepte l'appel, la tâche MAS 91, 191 pour le demi-appel du côté demandé transmet une signalisation d'appel entrant vers le terminal demandé 90, 190 (figures 4 et 6), en fournissant au moins l'adresse IP et les numéros de port UDP définis pour le terminal appelant dans le message d'établissement, et éventuellement son numéro d'annuaire.

Dans le cas d'un terminal appelé 90 de type IP, le serveur d'appel transmet cette signalisation directement dans une connexion TCP entre le terminal et la tâche MAS 91 (figure 4).

Dans le cas d'un terminal non-IP 190, le serveur d'appel transmet cette signalisation à la MGW 60, an ajoutant le numéro d'annuaire du terminal demandé. A réception de ces informations, la MGW crée une tâche T_MGW, qui communique l'appel entrant au terminal demandé 190 et lui affecte des ports UDP disponibles de l'interface 70.

Le couple (adresse IP, port UDP) valable pour le terminal demandé 90, 190 est retourné au MAS 81, 181 du côté demandeur (message ALERTE des figures 4 et 6), qui le transmet à l'adresse IP affectée au terminal appelant, c'est-à-dire à l'adresse IP du terminal dans le cas de la figure 3, et à celle de sa MGW dans le cas de la figure 5.

Ceci permet de définir un chemin utilisable pour la communication à l'intérieur du réseau IP, puisque les terminaux IP et les MGW connaissent les couples (adresse IP, port UDP) de leur vis-à-vis.

Lorsque le terminal appelé 90, 190 prend la ligne, la communication peut commencer (message de signalisation CONNECT sur les figures 3 à 6).

Si l'un des terminaux n'est pas de type IP, le processeur 75 de sa MGW complète le chemin de communication en commandant l'interface IP 70, le matrice de commutation 77 et l'interface 71-73 à laquelle est raccordée le terminal afin que les interfaces assurent les traductions requises et que la matrice 77 les fasse communiquer entre elles.

Parfois, les deux terminaux en communication sont raccordés à la même MGW. Ceci est immédiatement détectable par les tâches T_MGW puisque les adresses IP affectées aux deux terminaux sont identiques et correspondent à celle de la MGW.

Dans ce cas, la tâche T_MGW ne réserve pas de ports UDP de l'interface IP 70 pour la communication. La parole codée ne passera pas par l'interface IP 70, mais par les interfaces 71-73 auxquelles les deux terminaux sont respectivement raccordés et par la matrice de commutation 77. Le processeur 75 commande ces deux interfaces et la matrice 77 en conséquence.

Ce processus optimise l'utilisation des ressources du réseau IP ainsi que de ses interfaces dans les passerelles.

## Revendications

1. Procédé d'établissement de communications dans un système comprenant un réseau à commutation de paquets (54-56), au moins un serveur d'appel (52, 53) relié au réseau, au moins une passerelle de média (60, 61) reliée au réseau à une adresse de passerelle, un premier ensemble de terminaux (40-43) reliés au réseau à des adresses de terminaux respectives, et un second ensemble de terminaux (32-35) reliés à des interfaces (71-73) de la passerelle de média, dans lequel chaque terminal est associé à un serveur d'appel pour des traitements de signalisation, le procédé comprenant les étapes suivantes pour établir une communication entre des terminaux appelant et appelé :
- création d'une première tâche de traitement d'appel dans le serveur d'appel associé au terminal appelant ;
- émission, par la première tâche de traitement d'appel, d'un message d'établissement incluant au moins un identifiant du terminal appelé et une première adresse de réseau permettant d'atteindre le terminal appelant ;
- en réponse à la réception dudit message d'établissement, création d'une seconde tâche de traitement d'appel dans le serveur d'appel associé au terminal appelé ;
- envoi, à partir de la seconde tâche de traitement d'appel vers une seconde adresse de réseau permettant d'atteindre le terminal appelé, d'informations de signalisation indiquant au moins ladite première adresse de réseau ;
- lorsque les première et seconde adresse de réseau sont identiques et correspondent à une adresse de passerelle, établissement au sein de la passerelle ayant ladite adresse d'un chemin de communication entre les terminaux appelant et appelé, ne passant pas par le réseau à commutation de paquets.

2. Procédé selon la revendication 1, dans lequel le système comprend en outre au moins un contrôleur de passerelle de média ayant une adresse dans le réseau à commutation de paquets (54-56), et dans lequel, lorsque ladite seconde adresse correspond à une adresse de passerelle, lesdites informations de signalisation sont transmises de la seconde tâche de traitement d'appel au contrôleur de passerelle de média et relayées vers la seconde adresse de réseau par le contrôleur de passerelle de média.

3. Procédé selon la revendication 1 ou 2, dans lequel le réseau à commutation de paquets (54-56) fonctionne selon le protocole IP.

4. Passerelle de média, comprenant une interface (70) de raccordement à un réseau à commutation de paquets (54), des interfaces (71-73) de raccordement d'un ensemble de terminaux (32, 34), une matrice de commutation (77) reliée auxdites interfaces (70-73), et des moyens (75) de commande des interfaces et de la matrice de commutation pour établir des chemins de communication, au moins un serveur d'appel (52) étant relié au réseau pour effectuer des traitements de signalisation pour au moins les terminaux dudit ensemble,
dans laquelle les moyens de commande (75) sont agencés pour établir un chemin de communication en réponse à des instructions issues du serveur d'appel dans un échange de signalisation effectué sur le réseau à commutation de paquets (54), échange au cours duquel les moyens de commande (75) obtiennent des adresses de réseau respectives pour des terminaux appelant et appelé dont l'un au moins appartient audit ensemble,
le chemin établi passant par des interfaces de raccordement des terminaux appelant et appelé et par la matrice de commutation, sans passer par l'interface (70) de raccordement au réseau, lorsque lesdites adresses de réseau sont identiques et correspondent à une adresse de réseau de la passerelle,
le chemin établi passant par une interface de raccordement de l'un des terminaux appelant et appelé, par l'interface de raccordement au réseau et par la matrice de commutation lorsque l'une desdites adresses de réseau diffère de l'adresse de réseau de la passerelle.

## Claims

1. Method for setting up connections in a system comprising a packet-switching network (54-56), at least one call server (52, 53) connected to the network, at least one media gateway (60, 61) connected to the network at a gateway address, a first set of terminals (40-43) connected to the network at respective terminal addresses, and a second set of terminals (32-35) connected to interfaces (71-73) of the media gateway, wherein each terminal is associated with a call server for signalling processing, the method comprising the following steps for setting up a connection between calling and called terminals:
- creating a first call processing task in the call server associated with the calling terminal;
- transmitting, by the first call processing task, a setup message including at least one identifier of the called terminal and a first network address making it possible to reach the calling terminal;
- in response to the receipt of said setup message, creating a second call processing task in the call server associated with the called terminal;
- sending, from the second call processing task to a second network address that allows to reach the called terminal, of signalling information indicating at least said first network address;
- when the first and second network addresses are identical and correspond to a gateway address, setting up within the gateway having said address a connection path between the calling and called terminals which does not pass through the packet-switching network.

2. Method according to claim 1, wherein the system further comprises at least one media gateway controller having an address in the packet-switching network (54-56), and wherein, when said second address corresponds to a gateway address, said signalling information is transmitted from the second call processing task to the media gateway controller and relayed to the second network address by the media gateway controller.

3. Method according to either claim 1 or claim 2, wherein the packet-switching network (54-56) operates according to the IP protocol.

4. Media gateway, comprising an interface (70) for linking to a packet-switching network (54), interfaces (71-73) for linking a set of terminals (32, 34), a switching matrix (77) connected to said interfaces (70-73), and means (75) for controlling the interfaces and the switching matrix so as to set up connection paths, at least one call server (52) being connected to the network so as to perform signalling processing for at least the terminals of said set,
wherein the control means (75) are arranged so as to set up a connection path in response to instructions emanating from the call server in a signalling exchange performed over the packet-switching network (54), in the course of which exchange the control means (75) obtain respective network addresses for calling and called terminals, at least one of which belongs to said set,
the path which has been set up passing through interfaces for linking of the calling and called terminals and through the switching matrix, without passing through the interface (70) for linking to the network, when said network addresses are identical and correspond to a network address of the gateway,
the path which has been set up passing through an interface for linking one of the calling and called terminals, through the interface for linking to the network and through the switching matrix when one of said network addresses differs from the network address of the gateway.

## Patentansprüche

1. Verfahren zur Herstellung von Verbindungen in einem System, das ein paketvermitteltes Netz (54-56), mindestens einen Rufserver (52, 53), der mit dem Netz verbunden ist, mindestens ein Media-Gateway (60, 61), das mit dem Netz unter einer Gateway-Adresse verbunden ist, eine erste Endgeräte-Anordnung (40-43), die mit dem Netz unter jeweiligen Endgeräte-Adressen verbunden ist, und eine zweite Endgeräte-Anordnung (32-35), die mit Schnittstellen (71-73) des Media-Gateways verbunden ist, umfasst, wobei jedes Endgerät einem Rufserver für Signalverarbeitungen zugeordnet ist, wobei das Verfahren die folgenden Schritte umfasst, um eine Verbindung zwischen dem anrufenden und dem angerufenen Endgerät herzustellen:
- Erstellung einer ersten Rufbearbeitungsaufgabe in dem Rufserver, der dem anrufenden Endgerät zugeordnet ist;
- Ausgabe, durch die erste Rufbearbeitungsaufgabe, einer Herstellungsmeldung, die mindestens einen Identifikator des angerufenen Endgeräts und eine erste Netzadresse, mit der sich das anrufende Endgerät erreichen lässt, umfasst;
- als Antwort auf den Empfang der Herstellungsnachricht, Erstellung einer zweiten Rufbearbeitungsaufgabe in dem Rufserver, der dem angerufenen Endgerät zugeordnet ist;
- Sendung, von der zweiten Rufbearbeitungsaufgabe an eine zweite Netzadresse, mit der sich das angerufene Endgerät erreichen lässt, von Signalinformationen, welche die mindestens erste Netzadresse angeben;
- wenn die erste und zweite Netzadresse identisch sind und einer Gateway-Adresse entsprechen, Herstellung im Innern des Gateways, der die Adresse hat, eines Verbindungswegs zwischen dem anrufenden und dem angerufenen Endgerät, der nicht über das paketvermittelte Netz verläuft.

2. Verfahren nach Anspruch 1, wobei das System ferner mindestens einen Media-Gateway-Controller umfasst, der eine Adresse in dem paketvermittelten Netz (54-56) hat, und wobei, wenn die zweite Adresse einer Gateway-Adresse entspricht, die Signalinformationen von der zweiten Rufbearbeitungsaufgabe an den Media-Gateway-Controller gesendet werden und durch den Media-Gateway-Controller an die zweite Netzadresse übertragen werden.

3. Verfahren nach Anspruch 1 oder 2, wobei das paketvermittelte Netz (54-56) gemäß einem IP-Protokoll funktioniert.

4. Media-Gateway, umfassend eine Schnittstelle (70) für die Verbindung mit einem paketvermittelten Netz (54), Schnittstellen (71-73) für die Verbindung einer Endgeräteanordnung (32, 34), eine Vermittlungsmatrix (77), die mit den Schnittstellen (70-73) verbunden ist, und Mittel (75) zur Steuerung der Schnittstellen und der Vermittlungsmatrix, um Verbindungswege herzustellen, wobei mindestens ein Rufserver (52) mit dem Netz verbunden ist, um Signalverarbeitungen für mindestens die Endgeräte der Anordnung durchzuführen,
wobei die Steuermittel (75) dafür vorgesehen sind, einen Verbindungsweg als Antwort auf vom Rufserver ausgegebene Anweisungen in einem Signalaustausch, der in dem paketvermittelten Netz (54) durchgeführt wird, herzustellen, wobei im Laufe des Austausches die Steuermittel (75) jeweilige Netzadressen für das anrufende und das angerufene Endgerät erhalten, von denen zumindest eine der Anordnung zugeordnet ist,
wobei der hergestellte Weg über Schnittstellen für die Verbindung des anrufenden und des angerufenen Endgeräts und über die Vermittlungsmatrix verläuft, ohne über die Schnittstelle (70) für die Verbindung mit dem Netz zu verlaufen, wenn die Netzadressen identisch sind und einer Netzadresse des Gateways entsprechen,
wobei der hergestellte Weg über eine Schnittstelle für die Verbindung eines des anrufenden und des angerufenen Endgeräts, über die Schnittstelle für die Verbindung mit dem Netz und über die Vermittlungsmatrix verläuft, wenn eine der Netzadressen von der Netzadresse des Gateways abweicht.
